# EUROPÄISCHE PATENTANMELDUNG

(11) **EP 1 243 839 A2**
(43) Veröffentlichungstag der Anmeldung: **25.09.2002**
(21) Anmeldenummer: 02004991.2
(22) Anmeldetag: 06.03.2002
(51) Int. Cl.: F16L 37/40, F16L 37/23

(54) **Hochdruck-Schnellkupplung**

(30) Priorität: 22.03.2001 DE 20104973 U; 30.06.2001 DE 10131820
(71) Anmelder: ALTO Deutschland GmbH, 89287 Bellenberg (DE)
(72) Erfinder: Winkler, Bernd, 89287 Bellenberg (DE); Schaible, Ernst, 89165 Dietenheim (DE)
(74) Vertreter: Riebling, Peter, Dr.-Ing.

(57) **Zusammenfassung**

Die Erfindung betrifft eine Hochdruck-Schnellkupplung, bestehend aus einem Stecker (1) und eine auf diesen aufsteckbare Muffe (3), wobei in dem Stecker der Hochdruck-Schnellkupplung ein axial verschiebbarer Ventilkörper (4) angeordnet ist, der in seiner einen Verschlusslage in der Lage ist, die Auslassöffnung (6) des Steckers zu verschließen. Diese Hochdruck-Schnellkupplung ist leicht zu öffnen und zu schließen und steckbar ausgebildet, sicher und einfach in der Handhabung und schonend für die belasteten Teile eines Hochdruckreinigers.

Im weiteren Teil der Erfindung wird eine sichere Verriegelung der Steckverbindung aufgezeigt, die gewährleistet, dass die Steckverbindung nur dann gelöst werden kann, wenn sich der in der Steckverbindung betriebsmäßig vorhandene Hochdruck abgebaut hat. Erst dann kann die zur Verriegelung dienende Kugelsicherung entriegelt werden, wodurch das Trennen der beiden Steckverbindungsteile ermöglicht wird.

## Beschreibung

Die Erfindung betrifft eine Hochdruck-Schnellkupplung nach dem Oberbegriff des Patentanspruches 1 und dem Oberbegriff des Patentanspruches 11.

Hochdruckschnellkupplungen werden bei Hochdruckreinigern verwendet, um eine Kupplung zwischen dem Schlauch der Hochdrucklanze und dem Anschluss an der Maschine zu erreichen. Ebenso werden solche Kupplungen verwendet, um entsprechende Verlängerungsschläuche in den Hochdruckschlauch einzubauen. Bisher ist es lediglich bekannt, Hochdruck-Schnellkupplungen der eingangs genannten Art auszubilden, die lediglich schraubbar sind, so dass es sich hier also nicht um steckbare Kupplungen handelt, sondern nur um Gewindeverschraubungen, die entsprechend verschraubbar sind.

Der Erfindung liegt deshalb die Aufgabe zugrunde, eine Hochdruck-Schnellkupplung der eingangs genannten Art so weiterzubilden, dass sie steckbar ausgebildet ist und leicht zu öffnen und zu schließen ist.

Zur Lösung der gestellten Aufgabe ist die Erfindung durch die technische Lehre des Anspruches 1 gekennzeichnet.

Wesentliches Merkmal der Erfindung ist, dass in dem Stecker der Hochdruckkupplung ein axial verschiebbarer Ventilkörper angeordnet ist, der in seiner einen Verschlusslage in der Lage ist, die Auslassöffnung des Steckers zu verschließen und dass in der gegenüberliegenden Muffe ein festsitzendes Betätigungsteil angeordnet ist, das einen axial in Richtung freies Ende gerichteten Stößel aufweist, so dass beim Ineinanderstecken von Stecker und Muffe der Stößel des Betätigungsteils den im Stecker angeordneten Ventilkörper axial von der Auslassöffnung weg verschiebt und hierdurch die Auslassöffnung im Stecker freigibt.

Es wird also erfindungsgemäß ein Verschlusskörper (Ventilkörper) im Stecker der Hochdruckkupplung vorgeschlagen, der in seiner Öffnungsstellung von dem in der Muffe angeordneten Betätigungsteil aus seiner Lage wenigstens axial verschiebbar ist.

Die Verschlussstellung des Ventilkörpers wird selbsttätig dann erreicht, wenn die Muffe von dem Stecker abgezogen wird, so dass durch den auf den Ventilkörper wirkenden Wasserhochdruck dieser selbsttätig nach vorne verschoben wird und dann mit seiner vorderen, dichtenden Stirnfläche die Auslassöffnung im Stecker verschließt.

Auf diese Weise wird eine überlegene Sicherheit der Hochdruck-Schnellkupplung erreicht, weil beim Trennen von Stecker und Muffe der Ventilkörper selbsttätig nach vorne gelangt und die Auslassöffnung verschließt. Es kann also nicht vorkommen, dass das Hochdruckmedium über die offene Auslassöffnung unbeabsichtigt nach außen verspritzt.

Selbstverständlich kann es vorgesehen sein, dass die Dichtung des Ventilkörpers an der Innenseite des Steckers beabsichtigt ungenau ist, so dass das in der Maschine noch bestehende Hochdruckmedium langsam durch Ausfluss aus der Vorderseite des Ventilkörpers abfließen kann.

In einer anderen Weiterbildung der Erfindung ist es vorgesehen, dass der Ventilkörper noch zusätzlich weitere Funktionen übernimmt. Er ist in diesem Fall mit einem Rückteil verbunden, wobei dies entweder werkstoffeinstückig oder werkstoffzweistückig erfolgen kann. Dieses Rückteil ist so aufgebaut, dass es einen Durchlassquerschnitt mit radial nach außen geöffneten Durchlassöffnungen aufweist und eine in axialer Richtung ausgerichtete Drosselbohrung mit folgender Funktion:

Wenn die Hochdruckkupplung in Verschlusseingriff ist und der Ventilkörper die Auslassöffnung frei gegeben hat, kann es vorkommen, dass die Hochdrucklanze während des Betriebes geschlossen wird und hierdurch ein Wasserschlag entsteht, der rückwärtsgehend über die Muffe in den Stecker eindringt und durch den Ventilkörper (der ja in Offenstellung ist) vorbeigeht und die Ventile in der Hochdruckpumpe beschädigen kann.

Zu diesem Zweck ist der Ventilköper mit dem erwähnten Rückteil gekoppelt, in dem sich die erwähnte Drosselbohrung befindet. Der Wasserschlag wird in das Rückteil eindringen und das Rückteil wird dadurch gegen eine feststehende Anschlagfläche verschoben und dichtet dort ab, so dass der in rückwärtsgehender Richtung entstehende Hochdruck nur noch durch die erwähnte in axialer Richtung ausgerichtete Drosselbohrung hindurchgeht und das Hochdruckmedium sukzessiv abgebaut wird. Es entsteht also kein, für die Ventile der Hochdruckpumpe schädlicher, Rückstoß.

Die beiden Ventilkörper können - wie vorher erwähnt - miteinander kombiniert werden.

Im Weiteren besteht bei derartigen Schnellschlusskupplungen das Problem, dass der das Hochdruckmedium führende Schlauch unter einem Druck von z.B. 25 - 250 bar steht.

Ein weiterer Nachteil der bisher bekannten Schnellschlusskupplungen war, dass sie auch unter Druck gelöst werden konnten oder sich bei unsachgemäßer Zusammenfügung von selbst lösen konnten, was mit großen Gefahren verbunden war.

Der Nippel wird hierbei beispielsweise an einem Hochdruckreiniger befestigt, wobei die Gefahr bestand, dass bei gelöstem Stutzen unerwünscht heißes Wasser aus dem Nippel herausschoss und einen Benutzer verletzte.

Andererseits konnte der Stutzen plötzlich aufgrund der Wirkung des Hochdruckmediums vom Nippel abrutschen und konnte den Benutzer durch Herumschlagen verletzen.

Der Erfindung liegt deshalb die weitere Aufgabe zugrunde, eine Schnellschlusskupplung für Hochdruckschläuche bei Hochdruckreinigern so weiterzubilden, dass eine sichere Verriegelung der beiden lösbar miteinander verbundenen Teile unter Druck vorliegt und dass diese Kupplung unter Druckeinwirkung nicht lösbar ist.

Zur Lösung dieser Aufgabe ist die Erfindung nach dem unabhängigen Patentanspruch 11 dadurch gekennzeichnet, dass im Überdeckungsbereich zwischen einem Nippel und einem darauf geschobenen Stutzen eine mindestens teilweise umlaufende Verriegelungsnut vorgesehen ist und dass in dieser Verriegelungsnut eine oder mehrere Rastkugeln angeordnet sind, wobei jede Rastkugel sowohl teilweise in die Verriegelungsnut und teilweise in eine zugeordnete Kugelaufnahme an dem aufgeschobenen Stutzen eingreift und dass ferner der Stutzen von einem federbelasteten Kupplungsring übergriffen ist, in dem ebenfalls die in dem Stutzen angeordnete Kugelaufnahme mindestens teilweise fortgesetzt ist.

Es findet also eine Kugelaufnahme zwischen insgesamt drei Teilen statt, nämlich dem federbelasteten Kupplungsring, dem darunter angeordneten Stutzen und dem wiederum darunter angeordneten Nippel. Die Rastkugel greift also in drei Ausnehmungen dieser drei Teile gleichzeitig ein und verriegelt diese zueinander, solange der Nippel und der Stutzen unter Hochdruckeinfluß stehen.

Die beiden Teile (Nippel und Stutzen) versuchen nämlich unter Hochdruckeinfluss sich axial gegeneinander zu verschieben und ggf. sogar zu lösen. Hier setzt aber die Erfindung ein, die die Rastkugeln im Überdeckungsbereich zwischen dem Nippel und dem darübergeschobenen Stutzen vorsieht, wobei die Rastkugeln nur dann aus der Rastausnehmung im Nippel radial nach außen entfernt werden können, wenn der Kupplungsring eine entsprechende Ringnut in Überdeckung mit der Kugelaufnahme im Stutzen bringt, so dass die Kugel radial nach außen bewegbar ist und hierdurch aus der Rastaufnehmung am Nippel kommt.

Erst in diesem Zustand - wenn der federbelastete Stutzen entgegen der Federkraft verschoben wurde - kann die Rastkugel radial aus ihrer Rastausnehmung im Nippel nach außen entfernt werden und die beiden Teile (Nippel und Stutzen) können gegeneinander abgezogen werden.

Wichtig ist also, dass dieser Rasteingriff unter Hochdruckeinfluss, der im Nippel und im Stutzen wirkt und der die beiden Teile in axialer Richtung auseinanderzuziehen versucht, blockiert.

Dies wird erfindungsgemäß dadurch erreicht, dass im Wesentlichen schräg einander gegenüberliegende Anlageflächen für die Rastkugel sowohl in der Rastnut des Nippels als auch in der dazugehörenden Kugelausnehmung im verschiebbaren Stutzen vorgesehen sind. Die Kugel sperrt also die beiden Ausnehmungen gegeneinander unter Hochdruckeinfluss. Es bedarf zur Herstellung dieser Verriegelung keiner weiteren Hilfsmittel mehr. Erst wenn ein entsprechender axialer Verschiebedruck von den beiden genannten Teilen (Nippel und Stutzen) entfernt wurde, z. B. durch Entfernung des Druckes in der Hochdruckleitung, können die beiden Teile gegeneinander verschoben werden.

Im Übrigen ist die Erfindung nicht auf die Bezeichnung der verschiedenen Teile wie "Nippel" und "Stutzen" beschränkt. Diese Teile sind nur als Platzhalter für kuppelbare Teile an einem Hochdruckschlauch bezeichnet.

Hierbei ist es gleichgültig, ob der Nippel fest oder über eine flexible Schlauchverbindung mit dem Hochdruckreinigungsgerät verbunden ist, und es ist ferner gleichgültig, an welchem Teil der hierzu aufsteckbare Stutzen angeordnet ist.

Statt der Verbindung zwischen einem Nippel und einem Stutzen können auch zwei Rohrstutzen miteinander verbunden werden oder auch zwei Rohrmuffen oder dergleichen mehr.

Es soll also nur anhand dieses Ausführungsbeispieles aus Vereinfachungsgründen die Funktion dieser Schnellverschlusskupplung näher erläutert werden.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im Folgenden wird die Erfindung anhand von lediglich beispielhafte Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Schnitt durch einen Stecker nach der Erfindung;
- Figur 2:: Schnitt durch die Muffe nach der Erfindung;
- Figur 3:: die Vorderansicht einer ersten Ausführungsform eines Ventilkörpers;
- Figur 4:: die Vorderansicht einer zweiten Ausführungsform des Ventilkörpers;
- Figur 5:: die Vorderansicht des Betätigungsteils in der Muffe;
- Figur 6:: einen Schnitt durch eine zweite Ausführungsform im Vergleich zur Figur 1;
- Figur 7:: die Darstellung der Muffe im Schnitt;
- Figur 8:: die Stirnansicht des Betätigungsteils;
- Figur 9:: Schnitt durch die Schnellschlußkupplung nach der Erfindung im gesperrten Zustand;
- Figur 10:: die Kupplung nach Figur 1 im teilweise entsperrten Zustand;
- Figur 11:: die Kupplung im entkuppelten Zustand.

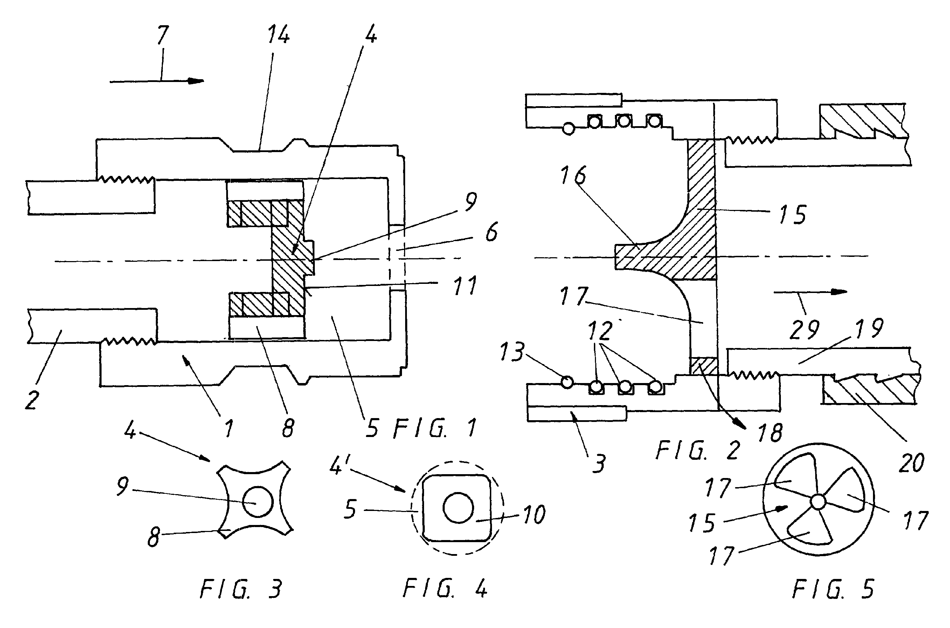

Der in Figur 1 dargestellte Hochdruckstecker 1 besteht im Wesentlichen aus einem Metallgehäuse, welches einen Innenraum 5 definiert. An das Metallgehäuse des Steckers 1 ist über eine Gewindeverschraubung der Fitting 2 angeschraubt, der unmittelbar am Ausgang des Hochdruckreinigungsgerätes ansetzt.

Im Innenraum 5 des Steckers 1 ist ein Ventilkörper 4 in axialer Richtung verschiebbar angeordnet, wobei der Stecker gemäß Figur 1 und Figur 3 mit radial nach außen gerichteten Rippen 8 versehen werden kann, die sich am lichten Innenumfang des Innenraumes 5 abstützen.

Diese Rippen 8 bilden damit einen definierten Durchlassquerschnitt, so dass das Hochdruckmedium frei in Pfeilrichtung 7 von dem Fitting 2, ausgehend an dem Ventilkörper 4 vorbei, durch die geöffnete Auslassöffnung 6 strömen kann.

Hierbei wird vorausgesetzt, dass die Muffe 3 auf den Stecker 1 aufgeschoben wird, so dass das feststehende Betätigungsteil 15 mit seinem axial in Richtung seinem freien Ende verlängerten Stößel 16 den Ventilkörper in seine Stellung nach Figur 1 verschoben hat.

Zur Rastverbindung zwischen Stecker 1 und Muffe 3 sind entsprechende Rückhaltelemente vorgesehen, welche folgend beschrieben werden.

Zunächst sind zur Abdichtung zwischen den beiden genannten Teilen 1 und 3 O-Ringe 12 am Innenumfang der Muffe 3 angeordnet, die sich an entsprechenden Dichtflächen radial außen am Stecker 1 anlegen.

Ferner sind Rastkugeln 13 vorgesehen, die in der Regel federbelastet ausgebildet sind und mit einer entsprechenden Schiebemuffe verbunden sind. Diese Rastkugeln greifen federbelastet in eine zugeordnete Rastnut 14 am Außenumfang des Steckers 1 ein.

Die hier dargestellte Verschlussvorrichtung ist nur beispielhaft und schematisiert dargestellt. Es können selbstverständlich sämtliche bekannten Verschlussvorrichtungen zwischen Stecker 1 und Muffe 3 verwendet werden.

Der Ventilkörper 4 des Steckers 1 weist an seiner vorderen Stirnseite eine Dichtfläche 11 auf, die sich abdichtend an den umlaufenden Außenumfang der Auslassöffnung 6 anlegen soll. Es ist nach vorne hin ein Vorsprung 9 vorgesehen, der mit dem Stößel 16 des Betätigungsteils 15 der Muffe 3 zusammenarbeitet.

In Betrieb wird also in der dargestellten Stellung bei zusammengestecktem Stecker 1 mit der Muffe 3 der Hochdruckstrom in Pfeilrichtung 29 durch den Innenraum der Muffe 3 strömen, wobei das Betätigungsteil 15 gleichmäßig am Umfang verteilt angeordnete Durchlassöffnungen 17 aufweist, durch die das Hochdruckmedium in Pfeilrichtung 29 strömt.

Die Muffe 3 ist im Übrigen mit einem Schlauchnippel 19 verbunden, auf dem der Schlauch 20 aufsitzt. Das Betätigungsteil 15 ist mit Presssitz 18 in den Innenraum der Muffe 3 eingepresst.

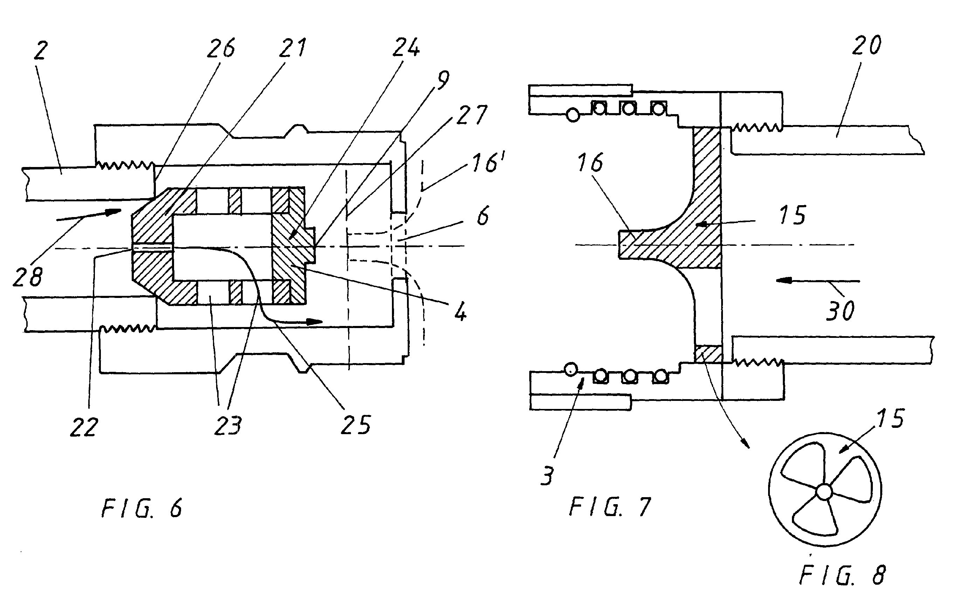

In Figur 6 ist eine Weiterbildung der Ausführung nach Figur 1 und 2 dargestellt.

Der Ventilkörper 4 ist in der gleichen Ausführung wie in Figur 1, 3 oder 4 auszubilden, d.h. er kann eine durchgehende Stirnfläche 10 aufweisen, wie er als Ventilkörper 4' in Figur 4 dargestellt ist oder er kann radial nach außen gerichtete Rippen 8 aufweisen, wie es in Figur 3 dargestellt ist.

Wichtig ist jedenfalls, dass das Rückteil 21, welches einstückig oder mehrstückig mit dem Ventilkörper 4, 4' verbunden ist, zur Behebung oder Dämpfung von Wasserschlägen geeignet ist. Insgesamt wird der Ventilkörper deshalb mit dem Bezugszeichen 24 versehen.

Das Rückteil 21 besteht im Wesentlichen aus einem hülsenförmigen Teil, welches den Außenumfang des Ventilkörpers 24 nach hinten verlängert, wobei in der Mantelfläche dieses Rückteils mehrere Durchgangsbohrungen 23 vorhanden sind, die in den Innenraum des Rückteils 21 münden.

Die hintere Stirnseite des Rückteils 21 ist mit einer in axialer Richtung weisenden Drosselbohrung 22 versehen.

In der Gebrauchslage liegt der Ventilkörper 24 etwa bei Position 27, so dass also der Stößel 16 auf dem Vorsprung 9 aufliegt und den Ventilkörper 24 stabil in dieser Stellung hält. Der Hochdruckstrom wird deshalb in Pfeilrichtung 28 am Außenumfang des Ventilkörpers 24 vorbeiströmen und entsprechend durch die Ausgangsöffnung 6 hindurch in die Muffe 3 einströmen.

Der Hochdruckstrom strömt hierbei in Pfeilrichtung 25 durch den Innenraum des Ventilkörpers 24 hindurch und durchsetzt die Durchgangsbohrungen 23.

Wenn hingegen ein in Pfeilrichtung 30 gerichteter Wasserrückschlag in dem Schlauch 20 entsteht, wandert dieser Rückschlag in der eingezeichneten Pfeilrichtung in entgegengesetzter Richtung zur Pfeilrichtung 25 durch die Durchgangsbohrungen 23 in den Innenraum des Ventilkörpers 24 hinein, der gleichzeitig schlagartig mit seiner Rückseite an eine Anschlagkante 26 im Fitting 2 anschlägt und hierdurch abdichtet. Der Wasserschlag wird deshalb nur in geringem Maße in entgegengesetzter Richtung zur Pfeilrichtung 25 die Drosselbohrung 22 durchsetzen können und wird dann langsam hierdurch abgebaut, wodurch dieser dann nicht mehr für die Ventile der Hochdruckpumpe gefährlich ist.

Der genannte Ventilkörper 4, 4', 24 kann aus einem hochdruckfesten Material wie z.B. Messing, Edelstahl oder aus einem vernickelten Metallmaterial bestehen.

Die Erfindung betrifft also eine Hochdruck-Schnellkupplung mit einem auf den Fitting des Hochdruckreinigers aufschraubbaren Stecker und eine auf diesen aufsteckbare Muffe, wobei in dem Stecker der Hochdruck-Schnellkupplung ein axial verschiebbarer Ventilkörper angeordnet ist, der in seiner einen Verschlusslage in der Lage ist, die Auslassöffnung des Steckers zu verschließen, wobei in der gegenüberliegenden Muffe ein festsitzendes Betätigungsteil angeordnet ist, das einen axial in Richtung freies Ende gerichteten Stößel aufweist, so dass beim Ineinanderstecken von Stecker und Muffe der Stößel des Betätigungsteils den im Stecker angeordneten Ventilkörper axial von der Auslassöffnung weg verschiebt und hierdurch die Auslassöffnung im Stecker freigibt.

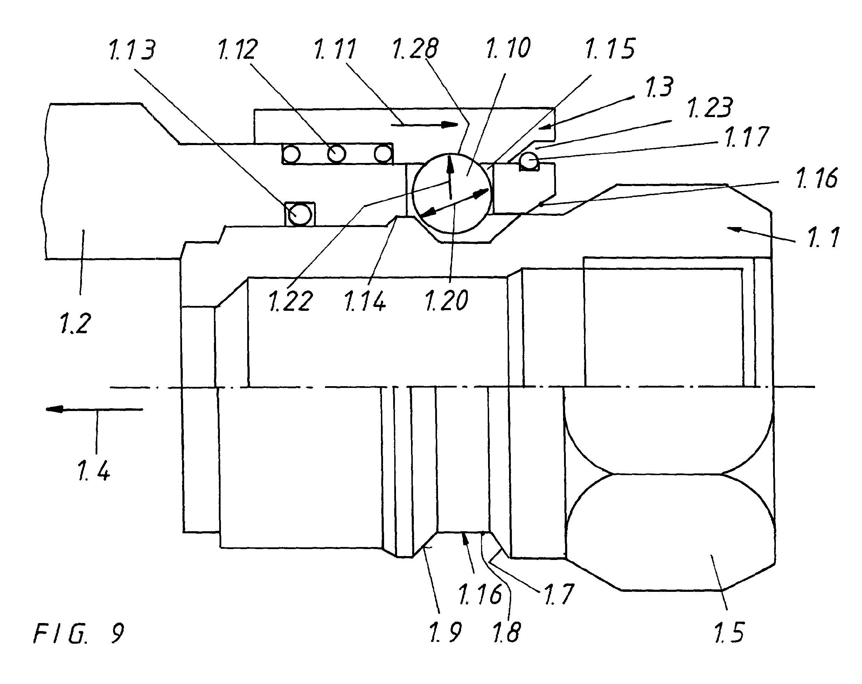

In den Figuren 9 bis 11, welche zur Lösung der weiteren Aufgabenstellung dienen, ist beispielsweise ein Nippel 1.1 fest an einem Hochdruckreinigungsgerät angeordnet und trägt hierbei einen Sechskant 1.5. Die Innenbohrung des Nippels 1.1 ist mit dem Hochdruckmedium gefüllt, welches einen Kraftvektor in Pfeilrichtung 1.4 ausübt. Auf den Nippel 1.1 ist ein Stutzen 1.2 aufgeschoben, dessen Sitz mittels eines federbelasteten Kupplungsringes 1.3 gesichert wird.

Gemäß Figur 9 trägt der Nippel 1.1 nun bevorzugt eine umlaufende Verriegelungsnut 1.6, die im Wesentlichen aus einer Bodenfläche 1.8 besteht, die etwa zylindrisch ausgerichtet ist (in der axialen Richtung) und von der ausgehend jeweils schräg ansteigende Seitenflanken 1.7, 1.9 vorgesehen sind.

Die Seitenflanke 1.9 ist die Verriegelungsflanke für eine Rastkugel 1.10, wobei die Rastkugel 1.10 mindestens teilweise gemäß Figur 9 in die Verriegelungsnut 1.6 eingreift.

Die Verriegelungsnut 1.6 wird nach oben hin in den Stutzen 1.2 fortgesetzt in eine Kugelaufnahme 1.15, die als radial durchgehende Bohrung ausgebildet ist. Hierbei können derartige Kugelaufnahmen 1.15 in Form von Bohrungen gleichmäßig verteilt am Stutzen 1.2 angeordnet sein.

Die Kugelaufnahmebohrungen 1.15 können hierbei konisch nach unten (radial einwärtsgerichtet) zulaufen, um zu verhindern, dass bei gelöster Steckkupplung die Rastkugeln 1.10 nach unten (radial einwärts) herausfallen. Wichtig ist, dass die Kugelaufnahme 1.15 sich radial auswärts fortsetzt in eine Ringnut 1.18, die am Innenumfang eines federbelasteten, verschiebbaren Kupplungsringes 1.3 angeordnet ist.

Diese Ringnut 1.18 ist bevorzugt umlaufend im Kupplungsring 1.3 eingearbeitet.

Im gezeigten Verriegelungsfall nach Figur 9 legt sich also die Kugel formschlüssig und kraftschlüssig einerseits an der Seitenflanke 1.9 der Verriegelungsnut 1.6 im Nippel 1.1 an und schräg gegenüberliegend an einer Bohrungswand 1.21 der Kugelaufnahme 1.15 an.

Durch diesen mit Pfeilrichtung 1.20 dargestellten Kraftvektor wird also die Sperrwirkung erreicht.

Wichtig ist, dass der Kraftvektor 1.20 schräg zur Längsachse der Steckverbindung ausgerichtet ist, so dass sich ein hierzu radial auswärtsgerichteter Kraftvektor 1.22 ergibt, der versucht, die Rastkugel 1.10 radial auswärts in der eingezeichneten Pfeilrichtung in die Ringnut 1.18 im Kupplungsring 1.3 zu verdrängen.

Auf diese Weise wird dafür gesorgt, dass der Kupplungsring 1.3 praktisch unverschiebbar ist, so lange das Hochdruckmedium wirkt und versucht, die beiden Teile 1.1, 1.2 auseinanderzuziehen. Dies wird wirksam durch den Kraftvektor 1.20 verhindert, der schräg im Winkel zur Zugrichtung des Hochdruckmediums wirkt.

Der Kupplungsring 1.3 wird also federbelastet aufgrund der Feder 1.12 in Pfeilrichtung 1.11 in Schließstellung gehalten.

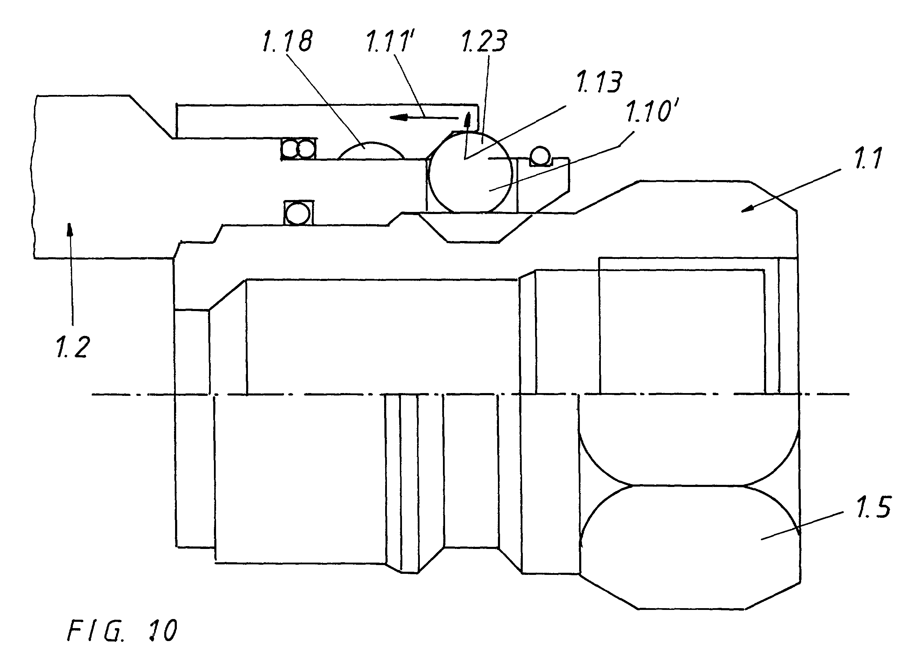

Soll die Kupplung geöffnet werden, dann wird der Übergangszustand nach Figur 10 erreicht, der zeigt, dass bei Verschiebung des Kupplungsringes 1.3 in Pfeilrichtung 1.11' die Ringnut 1.18 im Kupplungsring 1.3 außer Eingriff mit der Rastkugel 1.10 kommt und die Rastkugel dann in eine Ausnehmung 1.23 größerer radialer Weite gelangt.

Dadurch kann die Rastkugel 1.10 in ihre Stellung 1.10' radial auswärts aus der Verriegelungsnut 1.6 verdrängt werden und die Kupplung ist damit entsperrt.

Bei weiterer Verschiebung des Stutzens 1.2 in bezug zu dem feststehenden Nippel 1.1 gelangt damit auch die Rastkugel 1.10 auf eine radial auswärtsgerichtete Anschlagnase 1.14 am Nippel 1.1, so dass diese verhindert, dass die Rastkugel 1.10 wieder in die Verriegelungsnut 1.6 hineinfällt. Die Verriegelung ist damit entsperrt und die beiden Teile 1.1, 1.2 können voneinander abgezogen werden.

Der Vollständigkeit halber sei noch erwähnt, dass der Kupplungsring 1.3 an seiner vorderen Seite eine Einführschräge 1.16 trägt, um ein Aufschieben des Stutzens 1.2 auf den Nippel 1.1 zu erleichtern.

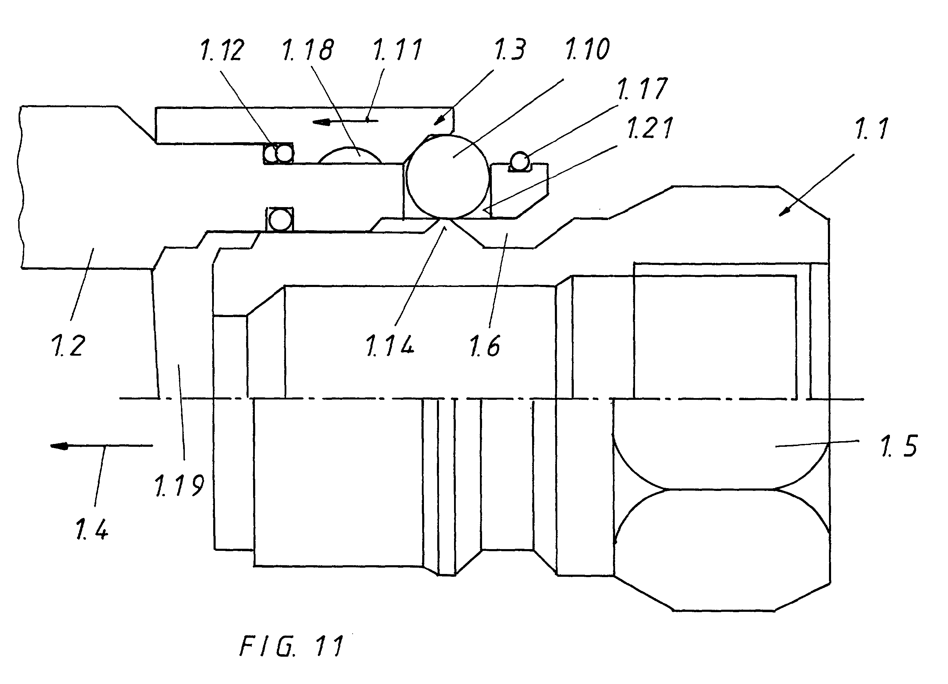

Ferner ist ein Arretierungsring 1.17 vorhanden der verhindert, dass im entkuppelten Zustand nach Figur 11 der Kupplungsring 1.3 abfällt.

Ferner ist ein O-Ring 1.13 vorhanden, der die Abdichtung zwischen dem Stutzen und dem Nippel übernimmt.

In Figur 11 ist dann erkennbar, dass sich zwischen den beiden axial zueinander verschiebbaren und kuppelbaren Teilen 1.1, 1.2 beim Entkuppeln ein Spalt 1.19 ergibt, der sich entsprechend vergrößert.

Die Erfindung betrifft also zusammenfassend eine Hochdruck-Schnellkupplung mit einem auf den entsprechenden Austrittsanschluss des Hochdruckreinigers aufmontierbaren Stecker und mit einer auf diesen Stecker aufsteckbaren Muffe, wobei in dem Stecker ein axial verschiebbarer Ventilkörper angeordnet ist. Dieser axial verschiebbare Ventilkörper wird in seiner Verschlusslage durch den Druck des Hochdruckmediums axial in Richtung freies Ende des Steckers verschoben und verschließt mit seiner Stirnseite hermetisch vollkommen dichtend oder aber zumindest stark drosselnd die Auslassöffnung des Steckers an dessen freien Ende, wo eine stirnseitige Dichtfläche sitzt. Die auf den Stecker aufsteckbare und mit diesem zusammenwirkende Muffe besitzt ein festsitzendes, inneres Betätigungsteil mit Betätigungsstößel, welcher axial in Richtung freies Ende des Betätigungsteiles zeigt und welcher beim Ineinanderstecken von Stecker und Muffe den im Stecker angeordneten Ventilkörper axial von der Auslassöffnung wegschiebt, so dass diese freigegeben wird. Hierdurch wird das an der zuvor verschlossenen Auslassöffnung anstehende Druckmedium vom Druckteil des Hochdruckreinigers über dessen Anschlussfitting in den Stecker um/durch dessen Ventilkörper in die aufgesteckte Muffe, durch dessen Betätigungsteil in den Hochdruckschlauch hinein- und aus dessen aufgesetzter Hochdrucklanze herausgepresst. Diese Hochdruck-Schnellkupplung ist also leicht zu öffnen und zu schließen steckbar ausgebildet, sicher und einfach in der Handhabung und schonend für die belasteten Teile des Hochdruckreinigers.

Im weiteren Teil der Erfindung wird eine sichere Verriegelung der Steckverbindung aufgezeigt, die gewährleistet, dass die Steckverbindung nur dann gelöst werden kann, wenn sich der in der Steckverbindung betriebsmäßig vorhandene Hochdruck abgebaut hat. Erst dann kann die zur Verriegelung dienende Kugelsicherung entriegelt werden, wodurch das Trennen der beiden Steckverbindungsteile ermöglicht wird.

### Zeichnungslegende

- 1: Stecker
- 2: Fitting
- 3: Muffe
- 4: Ventilkörper 4'
- 5: Innenraum
- 6: Auslassöffnung
- 7: Pfeilrichtung
- 8: Rippe
- 9: Vorsprung
- 10: Stirnfläche
- 11: Dichtfläche
- 12: O-Ring
- 13: Rastkugel
- 14: Rastnut
- 15: Betätigungsteil
- 16: Stößel
- 17: Durchlassöffnung
- 18: Presssitz
- 19: Schlauchnippel
- 20: Schlauch
- 21: Rückteil
- 22: Drosselbohrung
- 23: Durchgangsbohrung
- 24: Ventilkörper
- 25: Pfeilrichtung
- 26: Anschlagkante
- 27: Position
- 28: Pfeilrichtung
- 29: Pfeilrichtung
- 30: Pfeilrichtung

- 1.1: Nippel
- 1.2: Stutzen
- 1.3: Kupplungsring
- 1.4: Pfeilrichtung
- 1.5: Sechskant
- 1.6: Verriegelungsnut
- 1.7: Seitenflanke
- 1.8: Bodenfläche
- 1.9: Seitenflanke
- 1.10: Rastkugel
- 1.11: Pfeilrichtung
- 1.12: Feder
- 1.13: O-Ring
- 1.14: Anschlagnase
- 1.15: Kugelaufnahme
- 1.16: Einführschräge
- 1.17: Arretierungsring
- 1.18: Ringnut
- 1.19: Spalt
- 1.20: Kraftvektor
- 1.21: Bohrungswand
- 1.22: Kraftvektor
- 1.23: Ausnehmung

## Patentansprüche

1. Hochdruck-Schnellkupplung mit einem auf einen Fitting (2) des Hochdruckreinigers aufmontierbaren Stecker (1) und mit einer auf diesen Stecker (1) aufsteckbaren Muffe (3), **dadurch gekennzeichnet, dass** in dem Stecker (1) der Hochdruckkupplung ein axial verschiebbarer Ventilkörper (4) angeordnet ist, der in seiner einen Verschlusslage in der Lage ist, die Auslassöffnung (6) des Steckers (1) zu verschließen und dass in der gegenüberliegenden Muffe (3) ein festsitzendes Betätigungsteil (15) angeordnet ist, das einen axial in Richtung freies Ende gerichteten Stößel (16) aufweist, so dass beim Ineinanderstecken von Stecker. (1) und Muffe (3) der Stößel(16) des Betätigungsteils (15) den im Stecker (3) angeordneten Ventilkörper (4) axial von der Auslassöffnung (16) wegverschiebt und hierdurch die Auslassöffnung (16) im Stecker (1) freigibt.

2. Hochdruck-Schnellkupplung nach Anspruch 1, **dadurch gekennzeichnet, dass** eine stirnseitige Dichtfläche (11) des Ventilkörpers (4) für die dichtende Anlage an der stirnseitigen Innenseite (5) des Steckers (1) beabsichtigt ungenau ist und einen gewissen Durchfluss des Druckmediums auch bei Anlage im geschlossenen Zustand erlaubt.

3. Hochdruck-Schnellkupplung nach einem der Ansprüche 2 oder 3, **dadurch gekennzeichnet, dass** der Ventilkörper (4) des Steckers (1) und das Betätigungsteil (15) der Muffe (3) einen Durchlassquerschnitt für das Medium definiert.

4. Hochdruck-Schnellkupplung nach Anspruch 3, **dadurch gekennzeichnet, dass** der Ventilkörper (4) und das Betätigungsteil (15) als Durchlassquerschnitt für das Medium radial nach außen gerichtete, sternförmige Rippen (8) aufweist und/oder mindestens teilweise axialverlaufende Bohrungen aufweist und/oder im Querschnitt etwa kreisförmig oder oval oder polygon (auch quadratisch oder rechteckig) ausgebildet ist.

5. Hochdruck-Schnellkupplung nach einem der Ansprüche 1 bis 4, **dadurch gekennzeichnet, dass** der Ventilkörper (4) mit einem Rückteil (21) verbunden ist.

6. Hochdruck-Schnellkupplung nach Anspruch 5, **dadurch gekennzeichnet, dass** der Ventilkörper (4) mit dem Rückteil (21) werkstoffeinstückig oder werkstoffzweistückig verbunden ist.

7. Hochdruck-Schnellkupplung nach einem der Ansprüche 5 oder 6, **dadurch gekennzeichnet, dass** das Rückteil (21) ist so aufgebaut ist, dass es einen Durchlassquerschnitt mit mindestens einer radial nach außen geöffneten Durchlassöffnung (23) und mindestens einer in axialer Richtung ausgerichtete Drosselbohrung (21) aufweist.

8. Hochdruck-Schnellkupplung nach Anspruch 7, **dadurch gekennzeichnet, dass** die mindestens eine Drosselbohrung (21) einen geringeren Durchlassquerschnitt aufweist, als die mindestens eine Durchlassöffnung (23).

9. Hochdruck-Schnellkupplung nach einem der Ansprüche 7 oder 8, **dadurch gekennzeichnet, dass** eine axiale Drosselbohrung (21) und mehrere Durchlassöffnungen (23) vorgesehen sind.

10. Hochdruck-Schnellkupplung nach einem der Ansprüche 1 bis 9, **dadurch gekennzeichnet, dass** das Betätigungsteil (15) mit Presssitz (18) in der Muffe (3) aufgenommen ist und mindestens eine Durchlassöffnung (17) vorgesehen hat.

11. Hochdruck-Schnellkupplung, vorzugsweise für Hochdruckreiniger, im Wesentlichen bestehend aus einem Stutzen (1.2) und einem auf diesen Stutzen aufsteckbaren Nippel (1.1) sowie einem Kupplungsring (1.3), **dadurch gekennzeichnet, dass** eine Sicherungsvorrichtung durch die Druckbeaufschlagung durch das Hochdruckmedium eine Sperrwirkung zwischen den Komponenten (1.1, 1.2, 1.3) der Hochdruck-Schnellkupplung bewirkt.

12. Hochdruck-Schnellkupplung nach Anspruch 11, **dadurch gekennzeichnet, dass** die Sicherungsvorrichtung so ausgebidet ist, dass wenigstens eine Rastkugel (1.10) in einer Verriegelungsnut (1.6) im Nippel (1.1), einer Kugelaufnahme (1.15) im Stutzen (1.2) und einer Ringnut (1.18) im Kupplungsring (1.3) zu deren Sicherung eingreift.

13. Hochdruck-Schnellkupplung nach einem der Ansprüche 11 oder 12, **dadurch gekennzeichnet, dass** die Sicherungsvorrichtung im Überdeckungsbereich zwischen dem Nippel (1.1) und dem Stutzen (1.2)und dem diesen übergreifenden Kupplungsring (1.3) ausgebildet ist.

14. Hochdruck-Schnellkupplung nach einem der Ansprüche 11 bis 13, **dadurch gekennzeichnet, dass** die Verriegelungsnut (1.6) mindestens teilweise umlaufend ausgebildet ist und dass die darin angeordneten Rastkugeln (1.10) sowohl teilweise in die Verriegelungsnut (1.6) und teilweise in eine zugeordnete Kugelaufnahme (1.15) an dem aufgeschobenen Stutzen (1.2) eingreifen, welcher selbst von dem Kupplungsring (1.3) übergriffen ist, in dem sich die in dem Stutzen angeordnete Kugelaufnahme ebenfalls teilweise fortgesetzt ist.

15. Hochdruck-Schnellkupplung nach einem der Ansprüche 11 bis 14, **dadurch gekennzeichnet, dass** die umlaufende Verriegelungsnut (1.6) im Wesentlichen aus einer Bodenfläche (1.8) besteht, die in der axialen Richtung etwa zylindrisch ausgerichtet ist und von der ausgehend jeweils schräg ansteigende Seitenflanken (1.7, 1.9) vorgesehen sind.

16. Hochdruck-Schnellkupplung nach einem der Ansprüche 11 bis 15, **dadurch gekennzeichnet, dass** im Wesentlichen schräg einander gegenüberliegende Anlageflächen (1.9, 1.21) für die Rastkugel (1.10) sowohl in der Rastnut (1.6) des Nippels (1.1) als auch in der dazugehörenden Kugelaufnahme (1.15) im verschiebbaren Stutzen (1.2) vorgesehen sind.

17. Hochdruck-Schnellkupplung nach einem der Ansprüche 11 bis 16, **dadurch gekennzeichnet, dass** die Kugelaufnahmebohrungen (1.15) radial einwärts konisch zulaufen, um zu verhindern, dass bei gelöster Steckkupplung die Rastkugeln (1.10) radial einwärts herausfallen.

18. Hochdruck-Schnellkupplung nach einem der Ansprüche 11 bis 17, **dadurch gekennzeichnet, dass** die Kugelaufnahme (1.15) sich radial auswärts fortsetzt in eine Ringnut (1.18), die am Innenumfang des federbelasteten, verschiebbaren Kupplungringes (1.3) angeordnet ist.

19. Hochdruck-Schnellkupplung nach einem der Ansprüche 11 bis 18, **dadurch gekennzeichnet, dass** die Kugel (1.10) formschlüssig und kraftschlüssig einerseits an der Seitenflanke (1.9) der Verriegelungsnut (1.6) im Nippel (1.1) und andererseits schräg gegenüberliegend an einer Bohrungswand (1.21) der Kugelaufnahme (1.15) anliegt.

20. Hochdruck-Schnellkupplung nach einem der Ansprüche 11 bis 19, **dadurch gekennzeichnet, dass** ein Kraftvektor (1.20) schräg zur Längsachse der Steckverbindung ausgerichtet ist, so dass sich ein hierzu radial auswärtsgerichteter Kraftvektor (1.22) ergibt, der versucht, die Rastkugel (1.10) radial auswärts in der eingezeichneten Pfeilrichtung in die Ringnut (1.18) im Kupplungsring (1.3) zu verdrängen.

21. Hochdruck-Schnellkupplung nach einem der Ansprüche 11 bis 20, **dadurch gekennzeichnet, dass** ein Arretierungsring (1.17) vorhanden ist, der verhindert, dass im entkuppelten Zustand der Kupplungsring (1.3) abfällt.

22. Hochdruck-Schnellkupplung nach einem der Ansprüche 11 bis 21, **dadurch gekennzeichnet, dass** ein O-Ring (1.13) vorhanden ist, der die Abdichtung zwischen dem Stutzen (1.2) und dem Nippel (1.1)übernimmt.

23. Hochdruck-Schnellkupplung nach einem der Ansprüche 11 bis 22, **dadurch gekennzeichnet, dass** die Rastkugeln (1.10) nur dann aus der Rastausnehmung (1.6) im Nippel (1.1) radial nach außen entfernt werden können, wenn der Kupplungsring (1.3) eine entsprechende Ringnut (1.18) in Überdeckung mit der Kugelaufnahme (1.15) im Stutzen (1.2) bringt, so dass die Rastkugel (1.10) radial nach außen bewegbar ist und hierdurch aus der Rastaufnehmung (1.6) am Nippel (1.1) kommt.

24. Hochdruck-Schnellkupplung nach einem der Ansprüche 11 bis 23, **dadurch gekennzeichnet, dass** der Kupplungsring (1.3) an seiner vorderen Seite eine Einführschräge (1.16) trägt, um ein Aufschieben des Stutzens (1.2) auf den Nippel (1.1) zu erleichtern.
